# EUROPEAN PATENT SPECIFICATION

(11) **EP 1 118 194 B1**
(45) Date of publication and mention of the grant of the patent: **19.11.2003**
(21) Application number: 99946368.0
(22) Date of filing: 17.09.1999
(51) Int. Cl.: H04L 25/03, H04L 25/497

(54) **SEQUENCE ESTIMATION FOR PARTIAL RESPONSE CHANNELS**
FOLGESCHÄTZUNG FÜR PARTIAL-RESPONSE-KANÄLE
ESTIMATION DE SEQUENCE POUR VOIE A REPONSE PARTIELLE

(30) Priority: 19.09.1998 GB 9820343
(43) Date of publication of application: 25.07.2001
(73) Proprietor: LSI Logic Corporation, Milpitas, CA 95035 (US)
(72) Inventor: POPPLEWELL, Andrew, Prestwich Manchester M25 9QH (GB)
(74) Representative: Kay, Ross Marcel
(86) International application number: GB9903096
(87) International publication number: WO00018076

(56) References cited:
- EP-A- 0 133 480
- US-A- 5 619 539
- CARLEY L R ET AL: "A pipelined 16-state generalized Viterbi detector" 8TH ANNUAL MAGNETIC RECORDING CONFERENCE (TMRC) ON MAGNETIC RECORDING SYSTEMS, MINNEAPOLIS, MN, USA, vol. 34, no. 1, pt.1, 8 - 10 September 1997, pages 181-186, XP002128418 IEEE, USA ISSN: 0018-9464 cited in the application

## Description

The present invention relates to read arrangements and in particular to read arrangements for recovering digital data from input signals received over partial response channels and subsequently sampled.

In recovering digital data from partial response channels, it is necessary to deduce estimates of which of a number of ideal amplitudes of the input signal corresponds to the input signal at sampling times. The input signal can be hidden within large amounts of noise. The estimates of the ideal amplitude of the input signal are used in critical circuit blocks of the read arrangements such as timing recovery circuits and automatic gain control circuits. In particular, the estimates may be applied to algorithms which deduce phase and gain error terms, for feeding back in an attempt to obtain or maintain synchronisation of the system clock with the input signal and to track amplitude variations of the input signal respectively.

Traditionally, estimate deduction has been achieved by the use of a simple threshold slicer. In these slicers, an amplitude threshold is set midway between the ideal sample values, corresponding to the ideal amplitudes of the input signal, and an estimate of the ideal amplitude of the input signal is deduced by examining the actual amplitude of the input signal relative to the thresholds. For example, in a three level system having ideal sample values + A, O, -A, threshold levels would be placed at A/2 and -A/2. If the sample value is greater than A/2 then the received sample would be estimated as a +A sample. If the sample value is less than -A/2 then the received sample would be estimated as a -A sample. Otherwise, a zero sample would be provided as the estimate. This type of slicing arrangement has the advantage of being able to provide rapid estimates of the ideal sample values, thus limiting latency in the timing recovery and automatic gain control loops. However. the error rate of such data slicers increases rapidly with decreasing signal-to-noise ratio. Also, partial response read channels which demand four or more slicer levels are becoming more common. The increased number of levels, and thus the increased number of thresholds, results in further deterioration of the error rate. Certain types of emerging optical data storage channel are expected to yield error rates no lower than one in ten using conventional threshold slicers whereas error rates higher than 10⁻² are perceived to be unacceptable for timing recovery.

It has been proposed in a recent paper, "A Pipelined 16-state Generalised Viterbi Detector" by L Richard Cariey and Srinath Sridharan in the IEEE Transactions on Magnetics, Volume 34, No. 1. January 1998, to use a Viterbi detector having a survivor memory for automatic gain control and timing recovery purposes As recognised in this paper, use of a Viterbi detector in this way would introduce what may be considered to be unacceptable levels of latency into the read arrangement. A lower latency secondary detector in the form of a Fixed-Delay Tree Search (FDTS) circuit is used. in parallel to the Viterbi detector based data recovery circuit, to overcome this problem.

EP-A-0 133 480 discloses an apparatus and method for decoding output signals of a partial response communication or recording-device channel However, this document relates to simple (2-state) viterbi detector schemes.

It is an object of the present invention to provide a data slicer sub-circuit for a read arrangement which requires less circuitry than its equivalent as would be implemented in accordance with the above-mentioned paper.

According to the present invention, there is provided a read arrangement, for recovering digital data from input signals received over a partial response channel and subsequently sampled, comprising: processing means arranged to receive the sampled input signals and provide in response thereto digital signals to a first register of each of M sets of shift registers of length L registers, digital signals present in the shift registers being converged as they are clocked along the length of the set of shift registers from the first register to the L-th register to provide digital read signals, and a data slicer sub-circuit arranged to receive digital signals from the output of register N of at least two of the M sets of registers, where N is a number between but not including 1 and L and to provide in dependence thereon estimations of slicer levels associated with the input signals, characterised in that the data slicer sub-circuit further comprises a majority logic circuit arranged to provide the estimations in dependence on the digital signals

Such an arrangement may be able to provide estimates of slicer levels with a lower error rate than would be achieved using a conventional threshold data slicer, without suffering the latency drawbacks of the full survivor memory length Viterbi detector data slicer.

The processor means may be arranged to realise a branch metric update and add compare circuit.

The branch metric update and add compare select circuit contains circuitry which detects the difference between a sample of the input signal and each of the possible slicer levels, which differences may or may not be squared, and performs add, compare and select operations on the differences or squared differences.

According to the present invention, there is also provided a method of recovering digital data from input signals received over a partial response channel and subsequently sampled in a Viterbi decoder arrangement comprising M sets of length L sequentially arranged shift registers, each set coupled to an output from a branch metric update and add compare circuit responsive to said input signals, the method comprising the steps of shifting data through the L sequentially arranged shift registers in each of the M sets to produce convergence of digital signals between the M sets; at e predetermined distance N along the L sequentially arranged shift registers of at least two of the M sets, tapping an output value of a corresponding shift register; based on the output value, determining a most likely output of digital data from the Viterbi decoder arrangement and generating a logic level indicative thereof using a majority logic circuit, and based on knowledge of channel characteristics and historically collated logic level information. estimating a data slicer level for use in at least one of an automatic gain control circuit and a timing recovery circuit

This read arrangement may be used where the Viterbi algorithm is not necessary to recover data from partial response channels, for example read arrangements, for use with hard disk dnve read channels and the like, which use the Ferguson algorithm

An embodiment of the present invention will now be described, by way of example only, with reference to the accompanying drawings, of which:-
Figure 1 shows a conventional Viterbi detector read arrangement; and
Figure 2 shows a read arrangement in accordance with the present invention.

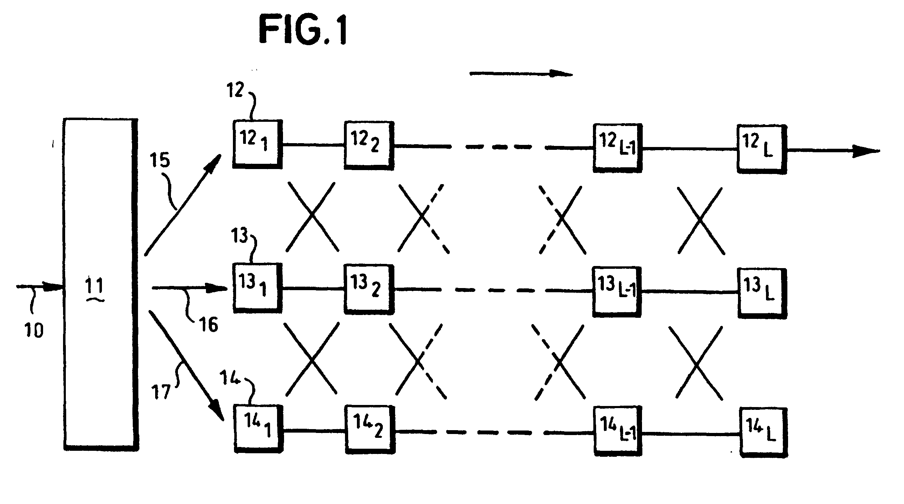

In Figure 1, the Viterbi detector read arrangement comprises generally an input 10 and a branch metric update (BMU) and add compare select (ACS) circuit 11, which is connected to a first register of each of first, second and M-th sets of registers 12, 13 and 14. Each of the sets of registers 12, 13 and 14 comprises L shift registers arranged sequentially, with their first register 12₁, 13₁ or 14₁ connected to their respective ones of the BMU and ACS circuit outputs 15, 16 and 17. The shift registers function as the survivor memory of the Viterbi detector read arrangement. The BMU and ACS circuit 11 receives the sampled input signal from the input 10 and makes M calculations involving the sample value from the instant and preceding sample times in accordance with the Viterbi algorithm, and provides the results to the first register of a respective one of the M sets of registers 12, 13 and 14. The calculations made by the BMU and ACS circuit 11 use knowledge of the allowable channel input and output sequences and involve the calculation of the squared difference between the n-bit sample of the input signal and all of the possible slicer levels, and subsequent add, compare and select calculations, as will be understood by the person skilled in the art.

There is a degree of interaction between registers of the sets of registers 12, 13 and 14 such that as digital signals are clocked or propagated along a set of registers from register 1 towards register L convergence of the digital signals between the registers 12 to 14 is obtained. The interaction between the registers of the sets 12, 13 and 14 which causes them to converge is represented schematically by the 'X's on Figure 1. The length of the sets of registers, i.e. the value of L, is predetermined and is usually set such that convergence will have been achieved by the time that the digital signals have reached the registers L for the lowest expected signal-to-noise ratio. Although in Figure 1 a read arrangement output 19 is shown from the set 12, any of the sets 12 to 14 will be sufficient as the digital signals should have converged by the register L of any of the sets 12, 13 or 14. The operation of this Viterbi detector read arrangement is well known in the art.

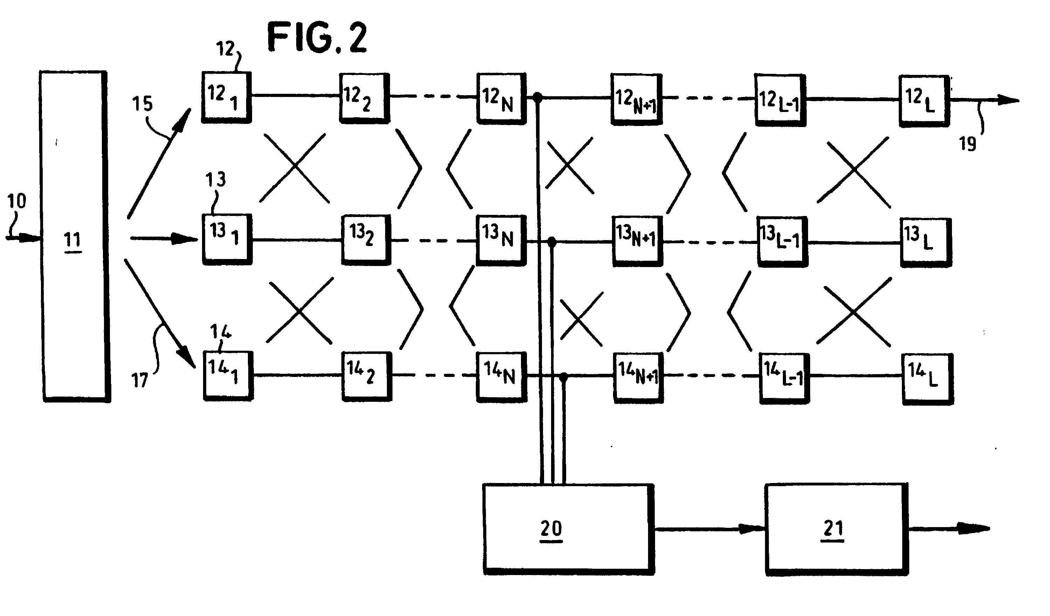

Referring now to Figure 2, a read arrangement in accordance with the present invention is shown having the same reference numerals as the Figure 1 read arrangement for like elements. The read arrangement further comprises a data slicer sub-circuit including a majority logic circuit 20 and a level logic converter 21. The majority logic circuit 20 is arranged to receive digital signals from the output of register N of each of the sets of registers 12, 13 and 14. The majority logic circuit 20 comprises logic devices arranged to determine from the digital signals provided at the outputs of the N-th register of each of the sets of registers 12, 13 and 14, the most likely digital signal to be provided on the output 19. To determine the most likely output signal, the majority logic circuit 20 sums the M signals provided by the sets of registers 12, 13 and 14. If the result is less than M/2, a logic O output is provided to the level logic converter 21. Otherwise, a logic 1 output is provided to the level logic converter 21. Of course, because the full length of the survivor memory or sets of shift registers is not used, the output of the majority logic circuit 20 will have a higher bit error rate than will the output 19. The digital signals determined by the majority logic circuit 20 to be most likely are provided to the level logic circuit 21. The level logic circuit uses knowledge of the channel characteristics and the signals provided by the majority logic circuit on preceding clock cycles to translate the received digital signals into a signal corresponding to the estimated slicer level. The estimated slicer level signal provided by the level logic circuit 21 is communicated to both of an automatic gain control circuit (not shown) and a timing recovery circuit (not shown) in a conventional manner.

The Figure 2 read arrangement thus provides on the ouput 19 slicer level signals having a low bit error rate but high latency for use in recovering data read from the channel, and slicer level signals from the level logic circuit 21 which have a higher bit error rate than the signals provided from the output 19 but a lower latency, which signals are thus more suitable for use in automatic gain control and timing recovery subcircuits. Only a small amount of additional circuitry, compared to the conventional Viterbi detector read arrangement, is necessary to achieve this result.

The form of the logic circuitry comprising the level logic circuit 21 is dependent particularly on the order of the memory of the partial response read channel with which the read arrangement is to be used. For example, if the channel has a memory of order 3, the level logic circuit must have the ability to hold the four most recent outputs from the majority logic circuit 21 and to map these to the appropriate multi-level symbol value.

The identity of the register of the sets of registers 12 to 14 the output signals from which are provided to the majority logic circuit 20, i.e. the value of N, is selected as a compromise between data slicer latency and data slicer error rate to optimise the timing recovery and gain control performance of the read arrangement. As the length of the sets of registers 12 to 14, i.e. the value of L, is predetermined by parameters of the system for minimum latency, the optimum value of N can be conveniently represented as a proportion of the total length of the survivor memory. Experiments have shown that the value of N will usually be within one fifth and one half the value of L, particularly within one quarter and one third the value of L.

The inventor has performed experiments to test the effectiveness of this invention. in a channel of type PR (1,2,2,1), i.e. the channel transfer function is 1+2D+2D²+D³ where D is a unit delay operator, with preceded (1,7) RLL data, a PR read arrangement having seven ideal input signal amplitudes or slicer levels is required. With a signal-to-noise ratio of 20dB and a survivor memory length of twenty-four, a prior art Viterbi detector based read arrangement achieved phase jitter of 8% compared to the 25% phase jitter resulting from use of a simple threshold slicer. The read arrangement of this invention, using N=6, achieved phase jitter of only 5%, a considerable and significant improvement over even the results obtained with the prior art Viterbi detector read arrangement.

Although the foregoing embodiment has been described utilising a majority logic circuit 20. At one extreme, a circuit could be arranged in place of the majority logic circuit 20 to receive digital signals from the N-th register of a single one of the sets of registers 12 to 14 and to assume that these digital signals are a good estimation of the slicer level. Conversely, a comparison circuit could be used in place of the majority logic circuit which operates to identify the accumulator of the ACS circuit which has the minimum value of digital signal. This comparison circuit alternative would provide output signals having a greatly reduced bit error rate to that of the arrangement mentioned above, and a significantly reduced bit error rate compared to the majority logic circuit 20 shown in Figure 2.

## Claims

1. A read arrangement, for recovering digital data from input signals (10) received over a partial response channel and subsequently sampled, comprising: processing means (11) arranged to receive the sampled input signals (10) and provide in response thereto digital signals to a first register (12, 13, 14) of each of M sets of shift registers of length L registers, digital signals present in the shift registers being converged as they are clocked along the length of the set of shift registers from the first register to the L-th register to provide digital read signals; and a data slicer sub-circuit (20,21) arranged to receive digital signals from the output of register N (12_{N}, 13_{N}, 14_{N}) of at least two of the M sets of registers, where N is a number between but not including 1 and L, and to provide in dependence thereon estimations of slicer levels associated with the input signals, **characterised in that** the data slicer sub-circuit (20,21) further comprises a majority logic circuit (20) arranged to provide the estimations in dependence on the received digital signals.

2. The read arrangement in accordance with claim 1, in which N is selected as a compromise between data slicer latency and data slicer error rate.

3. The read arrangement in accordance with Claim 2, in which the value of N is between one fifth and one half the value of L.

4. The read arrangement in accordance with Claim 3, in which the value of N is between one quarter and one third the value of L.

5. The read arrangement of any preceding claim, wherein the processing means (11) is arranged to realise a branch metric update and add compare circuit.

6. A method of recovering digital data from input signals received over a partial response channel and subsequently sampled in a Viterbi decoder arrangement comprising M sets of length L sequentially arranged shift registers, each set (12-14) coupled to an output from a branch metric update and add compare circuit responsive to said input signals. the method comprising the steps of:
shifting data through the L sequentially arranged shift registers in each of the M sets to produce convergence of digital signals between the M sets:
at a predetermined distance N along the L sequentially arranged shift registers of at least two of the M sets, tapping an output value of a corresponding shift register; **characterised in that**
based on the output value, determining a most likely output of digital data from the Viterbi decoder arrangement and generating a logic level indicative thereof using a majority logic circuit (20); and
based on knowledge of channel characteristics and historically collated logic level information, estimating a data slicer level for use in at least one of an automatic gain control circuit and a timing recovery circuit.

## Patentansprüche

1. Leseanordnung zur Wiederherstellung von digitalen Daten aus Eingangssignalen (10), die über einen teilweise antwortenden Kanal empfangen und anschließend gesampelt werden, mit einem Prozessor (11) zum Empfang der gesampelten Eingangssignale (10) und zur Übergabe der digitalen Signale als Antwort darauf auf ein erstes Register (12, 13, 14) aus jeweils M Sätzen von Schieberegistem aus Registern der Länge L, wobei die in den Schieberegistern vorhandenen digitalen Signale konvergieren, wenn sie entlang der Länge des Satzes von Schieberegistem vom ersten Register bis zum Lten-Register getacktet werden, um digitale Lesesignale abzugeben, und einer Daten-Slicer-Teilschaltung (20, 21), die digitale Signale vom Ausgang eines Registers N (12_{N}, 13_{N}, 14_{N}) von wenigstens zweien der M Sätze von Registern empfängt, wobei N eine Zahl zwischen 1 und L außer 1 ist, um in Abhängigkeit davon Schätzungen der Slicer-Grenzen bezüglich der Eingangssignale abzugeben, **dadurch gekennzeichnet, dass** die Daten-Slicer-Teilschaltung (20, 21) ferner eine logische Majoritätsschaltung (20) enthält, die so ausgebildet ist, dass sie Abschätzungen in Abhängigkeit von den empfangenen digitalen Signalen abgibt.

2. Leseanordnung nach Anspruch 1, bei der N als Kompromiss zwischen der Daten-Slicer-Latenzzeit und der Daten-Slicer-Fehlerrate gewählt ist.

3. Leseanordnung nach Anspruch 2, bei der der Wert von N zwischen einem Fünftel und einer Hälfte des Wertes von L liegt.

4. Leseanordnung nach Anspruch 3, bei der der Wert von N zwischen einem Viertel und einem Drittel des Wertes von L liegt.

5. Leseanordnung nach einem der vorhergehenden Ansprüche, bei der der Prozessor (11) so ausgebildet ist, dass er einen Zweig-Metrik-Update (branch metric update) und eine Zusatzvergleichsschaltung (add compare circuit) realisiert.

6. Verfahren zur Wiederherstellung digitaler Daten aus Eingangssignalen, die über einen teilweise antwortenden Kanal übertragen und nachfolgend in einem Viterbi-Decoder gesampelt werden, mit M Sätzen von sequenziell angeordneten Schieberegistem der Länge L, wobei jeder Satz (12 - 14) mit dem Ausgang eines Zweig-Metrik-Updates und eine Zusatzvergleichsschaltung gekoppelt ist, die auf die Eingangssignale reagieren, wobei das Verfahren die Schritte enthält: Verschieben von Daten zwischen den L aufeinanderfolgenden Schieberegistem in jedem der M-Sätze, um eine Konvergenz von digitalen Signalen zwischen den M Sätzen zu erzeugen, Ergreifen eines Ausgangswertes aus einem entsprechenden Schieberegister bei einem bestimmten Abstand N entlang der L sequentiell angeordneten Schieberegister von wenigstens zweien der M Sätze, **dadurch gekennzeichnet, dass** auf Basis des Ausgangswertes der wahrscheinlichste Ausgang der digitalen Signale des Viterbi-Decoders bestimmt wird und ein dies anzeigender logischer Pegel erzeugt wird, der eine Majoritätslogikschaltung (20) benutzt, und basierend auf der Kenntnis der Kanalcharakteristika und der historisch zugeordneten logischen Informationen, ein Daten-Slicer-Wert zur Verwendung bei wenigstens einer automatischen Verstärkungssteuerung und einer Zeitrückgabeschaltung abgeschätzt wird.

## Revendications

1. Agencement de lecture pour récupérer des données numériques à partir de signaux d'entrée (10) reçus sur un canal à réponse partielle et échantillonnés par la suite, comprenant : des moyens de traitement (11) agencés pour recevoir les signaux d'entrée échantillonnés (10) et pour fournir, en réponse à ceux-ci, des signaux numériques à un premier registre (12, 13, 14) de chacun de M ensembles de registres à décalage de registres de longueur L, les signaux numériques présents dans les registres à décalage étant acheminés d'une façon convergeante alors qu'ils sont décalés en synchronisation avec une horloge sur la longueur de l'ensemble de registres à décalage du premier registre jusqu'au L-ième registre pour fournir des signaux de lecture numériques ; et un sous-circuit de discrimination de données (20-21) agencé pour recevoir des signaux numériques de la sortie de registre N (12_{N}, 13_{N}, 14_{N}) d'au moins deux des M ensembles de registres, où N est un nombre entre mais ne comprenant pas 1 et L et pour fournir en fonction de ceux-ci des estimations de niveaux de discrimination associés aux signaux d'entrée, **caractérisé en ce que** le sous-circuit de discrimination de données (20-21) comprend, en outre, un circuit logique majoritaire (20) agencé pour fournir les estimations en fonction des signaux numériques reçus.

2. Agencement de lecture selon la revendication 1, dans lequel N est sélectionné en tant que compromis entre une latence d'éminceur de données et un taux d'erreurs d'éminceur de données.

3. Agencement de lecture selon la revendication 2, dans lequel la valeur de N est entre un cinquième et un demi de la valeur de L.

4. Agencement de lecture selon la revendication 3, dans lequel la valeur de N est entre un quart et un tiers de la valeur de L.

5. Agencement de lecture selon l'une quelconque des revendications précédentes, dans lequel les moyens de traitement (11) sont agencés pour réaliser un circuit de mise à jour métrique de branche et d'addition comparaison.

6. Procédé de récupération de données numériques à partir de signaux d'entrée reçus sur un canal à réponse partielle et échantillonnés par la suite dans un agencement de décodeur de Viterbi comprenant M ensembles de registres à décalage de longueur L agencés de manière séquentielle, chaque ensemble (12 à 14) étant couplé à une sortie d'un circuit de mise à jour métrique de branche et d'addition comparaison sensible auxdits signaux d'entrée, le procédé comprenant les étapes consistant à :
décaler des données à travers les L registres à décalage agencés de manière séquentielle dans chacun des M ensembles pour produire une convergence de signaux numériques entre les M ensembles ;
à une distance prédéterminée N le long des L registres à décalage agencés de manière séquentielle d'au moins deux des M ensembles, dériver une valeur de sortie d'un registre à décalage correspondant ; **caractérisé en ce que**
sur la base de la valeur de sortie, une sortie de données numériques la plus vraisemblable de l'agencement de décodeur de Viterbi est déterminée et un niveau logique indicatif de celle-ci est généré en utilisant un circuit logique majoritaire (20) ; et
sur la base de la connaissance des caractéristiques de canal et d'informations de niveau logique assemblées historiquement, un niveau de discrimination de données destiné à être utilisé dans l'un au moins d'un circuit de commande automatique de gain et d'un circuit de récupération de synchronisation est estimé.
